# EUROPEAN PATENT APPLICATION

(11) **EP 1 026 625 A1**
(43) Date of publication of application: **09.08.2000**
(21) Application number: 00200404.2
(22) Date of filing: 08.02.2000
(51) Int. Cl.: G06K 19/07

(54) **Wooden construction element**

(30) Priority: 08.02.1999 NL 1011245
(71) Applicant: Teha Groep B.V., 7483 PA Haaksbergen (NL)
(72) Inventor: ter Huurne, Johannes Bernardus, 7481 BA Haaksbergen (NL)
(74) Representative: Van Breda, Jacobus

(57) **Abstract**

The invention relates to a wooden construction element for use in the building industry, for instance a window frame. The invention further relates to a data-processing device, such as a computer having a data file, and to a method for inspecting a wooden construction element, such as a window frame, which is provided with a chip readable from the outside.

## Description

The invention primarily relates to a wooden construction element for utilization in the building industry, for instance a window frame. The invention further relates to a data-processing device such as a computer having a data file, and the invention finally relates to a method for inspecting such a wooden construction element, such as a window frame.

Wooden construction elements to which the invention relates, are generally known. To maintain them, a regular inspection and regular maintenance is essential. A disadvantage thereof is, however, that the regular inspecting and maintenance is costly, which is for a major part caused by the fact that the status of the wooden construction element is generally not or not directly available. Maintenance is therefore performed more frequently than necessary.

It is the object of the invention to improve matters. The wooden construction element according to the invention is therefore characterized in that it is provided with a chip. The chip may save and secure the status data of the wooden construction element in order to make them available where and when desired.

In that respect it is advantageous that the chip can be read from the outside, and particularly that the chip is electronically readable. In this way, the data can be made available each time when they are required without having to perform complicated steps.

Particularly when the number of status data is high, it is desirable that the chip is provided with a unique number, which number is also contained in a data file carrying data of the construction element in which the chip is provided.

This allows the very effective combination of the wooden construction element according to the invention with a data-processing device, such as a computer provided with a data file, which according to the invention is characterized in that it comprises a unique number for the identification of a series of coherent data corresponding with such a number which is contained in a chip forming part of a wooden construction element, such as a window frame.

In another aspect of the invention, the chip can also be contained in a building, preferably on a location which is easily accessible from the outside such as behind a house number attached to the building.

This offers moreover the advantage that the maintenance of the window frame or the building can easily be centrally organized and planned allowing for further cost reductions by using the data which are included in such a data-processing device.

The invention is also embodied as indicated above in a method for inspecting a wooden construction element such as a window frame, which is provided with a chip which is readable from the outside, and which method is characterized by the following steps: utilizing a chip reading device to read a unique number from a chip contained in the construction element; gaining access to data relating to the construction element, which are filed in a data-processing device and are identified therein or linked to the construction element by means of a unique number which is read from the chip; if required adjusting the data in the data-processing device depending on the result of the inspection.

According to this method and the data-processing device that is to be used in the method respectively the wooden construction element in which the chip is provided, it is possible to limit the painting frequency to once every ten year with a frequency of inspection of once every three years.

The invention shall now be further elucidated with reference to a non-limiting example.

A frame for a window is having a chip which is linked to data in a data base of a computer by means of a unique number. In the computer and the data base forming part thereof, all information required in relation to the window frame is present, such as the type of the window frame, its dimensions, the paint applied thereto and its thickness, the type of glass placed in the window frame, the type of wood and its iron work, the measures of the glass, the concerning order number relating to the frame, and such data. On the basis of this information, the history of the concerning window frame is recorded centrally by means of the computer and the data file that forms part thereof counting from the order date that relates to the said order number, and during its life span inspections are planned. Every inspection which is executed, is performed by electronically and digitally reading the unique number contained in the chip. In this way it is possible to make the concerning data available to the inspector depending on the type of reading equipment that is used, and to give input to the reading equipment relating to the actual status of the window frame, the data of the check, and so on. At a later stage, these data which are filed in the reading device, can be read into the central data base in order to allow for the planning of the further maintenance in the course of time. It is remarked that the said data need not be solely numerical. The data base can also include photographs in the form of digitized images of the concerning window frame.

The invention further offers the possibility that the inspection data as they are accumulated in the data file, can be made available by means of a CD-ROM.

## Claims

1. Wooden construction element for use in the building industry, for instance a window frame, **characterized** in that it is provided with a chip.

2. Wooden construction element according to claim 1, **characterized** in that the chip is readable from the outside.

3. Wooden construction element according to claim 2, **characterized** in that the chip is electronically readable.

4. Wooden construction element according to any one of claims 1-3, **characterized** in that the chip is provided with a unique number, which number is also contained in a data file carrying data of the construction element in which the chip is provided.

5. Data-processing device, such as a computer having a data file, **characterized** in that it comprises at least a unique number identifying a series of coherent data, corresponding with such number contained in a chip which is forming part of a building.

6. Data-processing device according to claim 5, **characterized** in that the chip is placed in the building on a location which is easily accessible from the outside such as behind a house number attached to the building.

7. Data-processing device according to claim 5, **characterized** in that the chip is embedded in a wooden construction element, such as a window frame.

8. Method for inspecting a wooden construction element, such as a window frame, which is provided with a chip readable from the outside, **characterized** by the following steps:
- utilizing a chip reading device to read a unique number from a chip contained in the construction element;
- gaining access to data relating to the construction element, which are filed in a data-processing device and are identified therein or linked to the construction element by means of a unique number which is read from the chip;
- if required adjusting the data in the data-processing device depending on the result of the inspection.
